# EUROPÄISCHE PATENTSCHRIFT

(11) **EP 2 369 218 B1**
(45) Veröffentlichungstag und Bekanntmachung des Hinweises auf die Patenterteilung: **22.08.2012**
(21) Anmeldenummer: 10305256.9
(22) Anmeldetag: 16.03.2010
(51) Int. Cl.: F16L 59/02, F16L 59/065, F16L 59/14, H01B 12/14

(54) **Anordnung mit einem supraleitfähigen Kabel**
Assembly with a superconducting cable
Agencement doté d'un câble supraconducteur

(43) Veröffentlichungstag der Anmeldung: 28.09.2011
(73) Patentinhaber: Nexans, 75008 Paris (FR)
(72) Erfinder: Dr. Soika, Rainer, 30559, Hannover (DE); Dipl.-Ing. Schippl, Klaus, 30659, Hannover (DE); Dipl.-Ing. Schmidt, Frank, 30855, Langenhagen (DE)
(74) Vertreter: Döring, Roger

(56) Entgegenhaltungen:
- EP-A1- 1 835 221
- EP-A1- 1 887 584
- EP-A2- 1 039 211
- WO-A2-2005/043028
- FR-A- 1 541 072
- US-A- 3 379 330

## Beschreibung

Die Erfindung betrifft eine Anordnung mit mindestens einem supraleitfähigen Kabel gemäß dem Oberbegriff des Patentanspruchs 1.

Eine solche Anordnung geht aus der EP 1 835 221 A1 hervor.

In einer derartigen Anordnung soll die isolierte Umhüllung des mindestens einen supraleitfähigen elektrischen Kabels und der Anschlußbereiche desselben in Endenabschlüssen sicherstellen, daß die niedrige Temperatur des in derselben geführten tiefgekühlten Kühlmittels langfristig und auch über längere Strecken ohne wesentliche Erwärmung erhalten bleibt. Ein derartiges Kühlmittel ist beispielsweise Stickstoff, der beispielsweise mit einer zwischen 67 K und 90 K liegenden Temperatur in die Endenabschlüsse bzw. in die Umhüllung eingebracht wird.

Ein in der erfindungsgemäβen Anordnung beispielsweise verwendbares Vakuumpaneel besteht gemäß dem DE 299 06 028 U1 aus einem Füllmaterial geringer Wärmeleitfähigkeit, wie beispielsweise zu einer Platte verpreßter Kieselsäure, das unter Vakuum in eine gas- und wasserdampfdichte, mechanisch beständige Umhüllung eingesiegelt ist. Es wird im Baubereich eingesetzt, zum Beispiel zur Wärmedämmung an Fassaden von Gebäuden.

Die EP 1 039 211 A2 beschreibt ein Verfahren zum thermischen isolieren eines kryogenen Behälters. Um den Behälter herum wird eine mehrschichtige Isolierung angebracht, die aus abwechselnd aufgebrachten wärmereflektierenden Folien und Abstandshaltern aus Glasfasern sowie zwei ein Vakuum zwischen sich einschließenden Kunststoffblättern besteht.

Aus der EP 0 326 923 B1 ist eine als Kryostat bezeichnete, thermisch isolierte Umhüllung für mindestens ein supraleitfähiges Kabel und dessen Endenabschlüsse bekannt. Dieser Kryostat besteht aus zwei einen Spalt zwischen sich einschließenden Rohren aus Edelstahl, die auch quer zu ihrer Längsrichtung gewellt sein können. In dem Spalt zwischen den beiden Rohren sind Abstandshalter aus einem Material geringer Wärmeleitfähigkeit und mit einem Metall kaschierte Kunststoff-Folien hoher Reflektivität angeordnet, durch welche die Wärmestrahlung reduziert wird. Außerdem ist der Spalt evakuiert. Ein solcher Kryostat hat sich in der Praxis bewährt. Er ist jedoch relativ aufwendig in der Herstellung.

Die bekannte Anordnung nach der eingangs erwähnten EP 1 835 221 A1 weist einen aus zwei mit Abstand konzentrisch zueinander angeordneten Rohren bestehenden Kryostat auf. Der Zwischenraum zwischen den beiden Rohren ist evakuiert. In dem Zwischenraum sind außerdem Abstandshalter und als Gasabsorber dienende Bauteile angebracht, in denen sich vakuumdicht verschlossenes Gettermaterial befindet. Die Bauteile brechen bei einer vorgegebenen Temperatur auf, so daß das Gettermaterial zum Absorbieren von Gas freigesetzt wird.

Der Erfindung liegt die Aufgabe zugrunde, den Aufbau der Umhüllung einschließlich thermischer Isolierung der eingangs geschilderten Anordnung zu vereinfachen.

Diese Aufgabe wird entsprechend dem kennzeichnenden Merkmal des Patentanspruchs 1 gelöst.

Bei dieser Anordnung besteht die Umhüllung des supraleitfähigen Kabels und seiner Anschlußbereiche bzw. Endenabschlüsse nur aus einer rundum geschlossenen Metallschicht und aus einer dieselbe umgebenden, wärmeisolierenden Schicht aus lückenlos aufgebrachten Vakuumpaneelen. Die Anordnung ist also sehr einfach und mit geringem Materialaufwand aufgebaut. Es hat sich dabei überraschend herausgestellt, daß eine von derartigen Vakuumpaneelen lückenlos umgebene, rundum geschlossene Metallschicht ausreicht, um ein supraleitfähiges Kabel und seine Endenabschlüsse wirksam gegenüber Wärmeeinfall von außen zu schützen, so daß das supraleitfähige Kabel in üblicher Technik gekühlt und betrieben werden kann. Von besonderem Vorteil ist dabei, daß der Betrieb des supraleitfähigen Kabels zumindest nicht sofort unterbrochen werden muß, wenn eines der voneinander getrennten Vakuumpaneele beschädigt wird, weil eine solche Beschädigung örtlich begrenzt bleibt. Die Wirksamkeit der Vakuumpaneele in den anderen Bereichen der Anordnung ist davon unabhängig und bleibt unverändert erhalten. Eine wirksame Kühlung des supraleitfähigen Kabels ist daher auch bei Beschädigung eines der Vakuumpaneele für einen ausreichenden Zeitraum gewährleistet.

In einer vorteilhaften Ausgestaltung der Anordnung kann auf die metallische Umhüllung zunächst noch eine Schicht aus einem herkömmlichen, wärmeisolierenden Material aufgebracht werden, wie beispielsweise Polyurethan. Um diese Schicht wird dann die Einheit von Vakuumpaneelen herumgelegt. Das zusätzliche wärmeisolierende Material sichert den Betrieb des supraleitfähigen Kabels auch dann für einen ausreichenden Zeitraum, wenn mehr als ein Vakuumpaneel beschädigt wird.

Ausführungsbeispiele des Erfindungsgegenstandes sind in den Zeichnungen dargestellt.

Es zeigen:
Fig. 1 in schematischer Darstellung ein System mit einer Anordnung nach der Erfindung.
Fig. 2 und 3 Schnitte durch Fig. 1 in zwei unterschiedlichen Ausführungsformen in vergrößerter Darstellung.
Fig. 4 eine Seitenansicht einer Anordnung nach Fig. 2 oder Fig. 3.

Die metallische Umhüllung mit der sie umgebenden wärmedämmenden Isolierung aus Vakuumpaneelen wird im folgenden der Einfachheit halber als "Kryostat" bezeichnet.

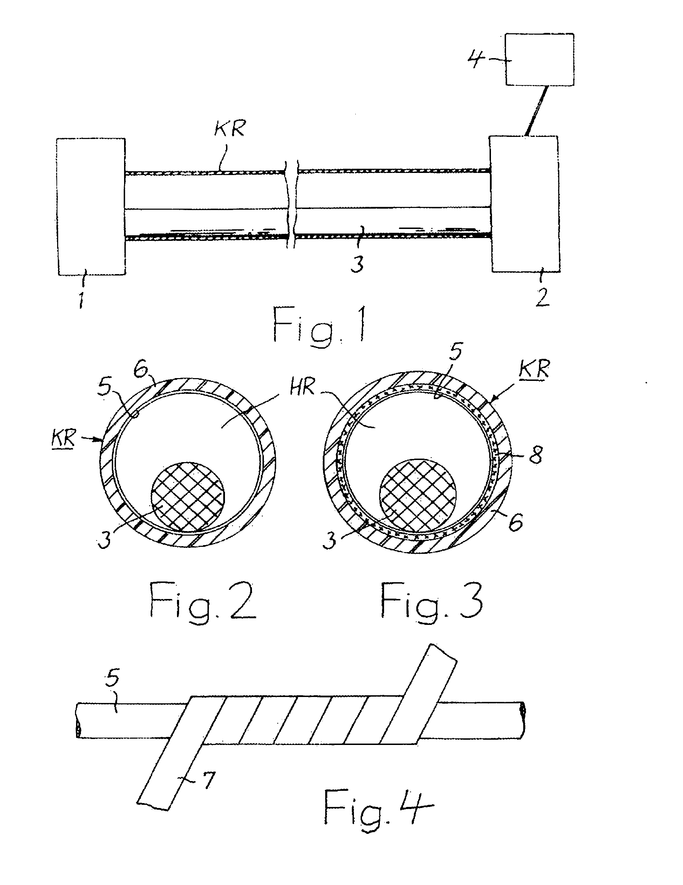

Ein in Fig. 1 schematisch dargestelltes Kabelsystem hat zwei Endenabschlüsse 1 und 2, zwischen denen ein supraleitfähiges Kabel 3 angeordnet ist. Das supraleitfähige Kabel 3 kann in den Endenabschlüssen 1 und 2 mit einem weiterführenden supraleitfähigen Kabel oder mit einem normalleitenden Kabel oder über eine entsprechend gestaltete Durchführung mit einer elektrischen Einrichtung verbunden sein. Der Aufbau des supraleitfähigen Kabels 3 und sein elektrischer Anschluß an weiterführende Teile sind hier nicht von Bedeutung. Es wird daher nicht genauer darauf eingegangen.

Das supraleitfähige Kabel 3 und die beiden Endenabschlüsse 1 und 2 sind von einem Kryostat KR umgeben, dessen Aufbau beispielsweise aus den Fig. 2 und 3 hervorgeht. In den Kryostat KR wird beispielsweise ein in einem Vorratsraum 4 vorhandenes Kühlmedium eingespeist, wie beispielsweise Stickstoff, durch welches der supraleitfähige Leiter bzw. die supraleitfähigen Leiter des Kabels 3 in den supraleitfähigen Zustand gebracht und in diesem Zustand gehalten wird bzw. werden. Das wird durch den Kryostat KR gewährleistet, der die Endenabschlüsse 1 und 2 umgibt und in dem auf der Strecke zwischen den beiden Endenabschlüssen 1 und 2 das Kabel 3 untergebracht ist. Er weist einen Hohlraum HR auf, durch welchen das Kühlmittel entlang des Kabels 3 geführt werden kann. In dem Kryostat KR können auch zwei oder mehr supraleitfähige Kabel angeordnet sein.

Der Kryostat KR besteht aus einer als rundum geschlossene Umhüllung 5 dienenden Metallschicht, für die beispielsweise Edelstahl verwendet ist. Er kann in dem das supraleitfähige Kabel 3 umgebenden Bereich mit Vorteil als Rohr ausgeführt sein, das auch quer zu seiner Längsrichtung gewellt sein kann. Die Metallschicht der Umhüllung 5 ist rundum von einer Isolierung 6 aus wärmedämmendem Material umgeben, die aus einer Vielzahl von zu einer Einheit zusammengefaßten Vakuumpaneelen besteht. Die Einheit aus Vakuumpaneelen ist als Band 7 (Fig. 4) ausgeführt, das lückenlos um die Umhüllung 5 herumgewickelt ist. Die gesamte äußere Oberfläche der Metallschicht der Umhüllung 5 ist danach durch das die geschlossene Isolierung 6 ergebende Band 7 abgedeckt. Zur Erzeugung der Isolierung 6 wird mindestens ein Band 7 um die Umhüllung 5 herumgewickelt. Es kann auch ein zweites Band über dem ersten lückenlos aufgewickelt werden, und zwar vorteilhaft mit entgegengesetzter Wickelrichtung.

Vor dem Aufwickeln des Bandes 7 auf die Metallschicht der Umhüllung 5 kann in bevorzugter Ausgestaltung der Anordnung gemäß Fig. 3 zunächst eine Zwischenschicht 8 aus herkömmlichem, wärmedämmendem Isoliermaterial auf die Umhüllung 5 aufgebracht werden. Sie besteht mit Vorteil aus Polyurethan und schirmt das Innere der Umhüllung 5 für einen wesentlichen Zeitraum gegen Wärmeeinfall von außen ab, auch wenn die Isolierung 6 beschädigt ist. Das Band 7 wird zur Fertigstellung der Anordnung, wie bereits beschrieben, auf die Zwischenschicht 8 aufgewickelt.

Die die Umhüllung 5 insgesamt umgebenden, wärmeisolierenden Materialien sollen mit Vorteil so bemessen sein, daß der Wärmeeinfall in das Innere der Umhüllung 5 im Falle einer Beschädigung der "Wärmeisolierung" kleiner als die Leistungsreserve der das Kühlmedium abkühlenden Kühlanlage ist. Diese Leistungsreserve liegt beispielsweise bei 200 W. Eine Beschädigung der Isolierung 6 auf einer Länge von beispielsweise 10 m darf dann maximal zu einem Wärmeeinfall von 200 W führen. Das wird mit Vorteil auch bei der Bemessung der Zwischenschicht 8 berücksichtigt.

Über der geschlossenen Isolierung 6 kann zu deren mechanischem Schutz eine Schutzschicht aus einem mechanisch stabilen Material angebracht sein.

## Patentansprüche

1. Anordnung mit mindestens einem suprateitfähigen Kabel, das in einer aus Metall bestehenden, rundum geschlossenen Umhüllung (5) angeordet ist, welche rundum von einer thermischen Isolierung (6) umgeben ist, in welcher Isolierung (6) vakuumdichte, ein Füllmaterial enthaltende Bauteile enthalten sind, und welche Umhüllung (5), neben dem Kabel einen Hohlraum zum Durchleiten eines Kühlmittels umschließt, **dadurch gekennzeichnet,**
- **daß** die Umhüllung (5) aus nur einer rundum geschlossenen Metallschicht besteht,
- **daß** die vakuumdichten Bauteile Vakuumpaneele sind und
- **daß** die Isolierung (6) aus mindestens einer Lage aus einer Vielzahl von Vakuumpaneelen besteht, die in Form eines Bandes (7) in einer Einheit zusammengefaßt sind, welches die Umhüllung (5) lückenlos umgibt.

2. Anordnung nach Anspruch 1, **dadurch gekennzeichnet, daß** die Umhüllung (5) von einer Zwischenschicht (8) aus einem herkömmlichen, wärmedämmenden Material umgeben ist, über welcher die Einheit aus Vakuumpaneelen angebracht ist.

3. Anordnung nach Anspruch 1 oder 2, **dadurch gekennzeichnet, daß** die Isolierung (6) von einer dem mechanischen Schutz dienenden Schutzschicht aus mechanisch stabilem Material umgeben ist.

## Claims

1. Arrangement with at least one super conductive electricalcable (3),whichis p la c e d within a metallic casing (5) whic h is closed in circumferential direction a nd which is surrounded b y a thermal insulation (6), whic h insulation (6) comprises vacuum tight e le me nts with a filler material within the same and whic h casing (5) beneththe cable also enclosesa hollowspace (HR) for the guidance ofa cooling medium, **characterized in**
- **that** the casing (5) consists only of one metal layer which is closed in circumferential direction,
- **that** the vacuum tight elements are vacuum panels and
- **that** the insulation (6) comprises at least one layerofapluralityofvacuum panels, which are combined to one unit in the form of a ribbon, which surrounds the casing (5)completelywithoutgaps.

2. Arrangement according to claim 1, **characterized in that** the casing (5) is surrounded by an intermediate layer(8), consisting of a conventional, thermally insula ting material which is surrounded by the unit of vacuum panels.

3. Arrangement according to claim 1 or 2, **characterized in that** the thermal insulation (6) for its mechanical protection is surrounded by a protecting layer consisting of mechanically stable material 1.

## Revendications

1. Arrangement comprenant au moins un câble supraconducteur qui est disposé dans un gainage (5) constitué d'un métal et fermé sur le pourtour, lequel est entouré sur le pourtour par une isolation thermique (6), isolation (6) dans laquelle sont contenus des composants hermétiques au vide contenant un matériau de remplissage, et gainage (5) qui, outre le câble, entoure un espace creux pour laisser passer un fluide réfrigérant, **caractérisé en ce**
- **que** le gainage (5) ne se compose que d'une couche métallique fermée sur le pourtour,
- **que** les composants hermétiques au vide sont des panneaux sous vide et
- **que** l'isolation (6) se compose d'au moins une couche constituée d'une pluralité de panneaux sous vide qui sont regroupés en un seul ensemble sous la forme d'une bande (7), laquelle entoure entièrement le gainage (5).

2. Arrangement selon la revendication 1, **caractérisé en ce que** le gainage (5) est entouré d'une couche intermédiaire (8) en un matériau d'isolation thermique classique sur lequel est appliqué l'ensemble constitué des panneaux sous vide.

3. Arrangement selon la revendication 1 ou 2, **caractérisé en ce que** l'isolation (6) est entourée d'une couche de protection en matériau mécaniquement stable servant de protection mécanique.
